# EUROPEAN PATENT SPECIFICATION

(11) **EP 3 503 623 B1**
(45) Date of publication and mention of the grant of the patent: **04.03.2020**
(21) Application number: 17210248.5
(22) Date of filing: 22.12.2017
(51) Int. Cl.: H04W 36/00, H04W 36/14

(54) **MOVING A COMMUNICATION TERMINAL FROM A FIRST COMMUNICATION NETWORK TO A SECOND COMMUNICATION NETWORK**
VERLEGUNG EINES KOMMUNIKATIONSENDGERÄTS VON EINEM ERSTEN KOMMUNIKATIONSNETZWERK ZU EINEM ZWEITEN KOMMUNIKATIONSNETZWERK
DÉPLACEMENT D'UN TERMINAL DE COMMUNICATION D'UN PREMIER RÉSEAU DE COMMUNICATION À UN SECOND RÉSEAU DE COMMUNICATION

(43) Date of publication of application: 26.06.2019
(73) Proprietor: NTT DoCoMo, Inc., Tokyo 100-6150 (JP)
(72) Inventor: MUTIKAINEN, Jari, 80687 Munich (DE); GUERZONI, Riccardo, 80687 Munich (DE)
(74) Representative: Viering, Jentschura & Partner mbB Patent- und Rechtsanwälte

(56) References cited:
- US-A1- 2016 323 733
- SAMSUNG: "SMF selection in roaming scenario", 3GPP DRAFT; S2-171133_SMF SELECTION IN ROAMING SCENARIOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Dubrovnik, Croatia; 20170213 - 20170217 13 February 2017 (2017-02-13), XP051217249, Retrieved from the Internet: URL:http://www.3gpp.org/ftp/Meetings_3GPP_ SYNC/SA2/Docs/ [retrieved on 2017-02-13]
- QUALCOMM INCORPORATED: "TS 23.502: PDU session ID association in HO procedure", 3GPP DRAFT; S2-177636_WAS 7170_PDU SESSION ID ASSOCIATION IN HO PROCEDURE-R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. SA WG2, no. Ljubljana, Slovenia; 20171023 - 20171027 30 October 2017 (2017-10-30), XP051360290, Retrieved from the Internet: URL:http://www.3gpp.org/ftp/tsg_sa/WG2_Arc h/TSGS2_123_Ljubljana/Docs/ [retrieved on 2017-10-30]
- NOKIA ET AL: "23.502: OI#13 - 5GS Registration procedure at mobility between EPS and 5GS with existing 5GC non-3GPP PDU session", 3GPP DRAFT; S2-179548 WAS9237 WAS9156_PCR23502 EPS TO 5GS REGISTRATION_DRAFT3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. SA WG2, no. Reno, NV, US; 20171127 - 20171201 4 December 2017 (2017-12-04), XP051380116, Retrieved from the Internet: URL:http://www.3gpp.org/tsg_sa/WG2_Arch/TS GS2_124_Reno/Docs/S2-179548 was9237 was9156_pCR23502 EPS to 5GS Registration_draft3.doc [retrieved on 2017-12-04]

## Description

The present disclosure relates to a method for moving a communication terminal from a first communication network to a second communication network and a communication network arrangement. A communication terminal may have one or more Packet Data Network connections to a Packet Data Network Gateway in an Evolved Packet Core (EPC), i.e. a core network of a 4G (Fourth Generation) communication network. In a 5G (Fifth Generation) communication network, a Session Management Function of a 5GC (5G core network), for which multiple instances may be present in the 5GC, is responsible for provision of Packet Data Network sessions. For the case that a mobile terminal moves from a 4G communication network to a 5G communication network, a mechanism is therefore desirable which allows associating a Packet Data Network connection with a corresponding SMF.

US 2016/0323733 A1 discloses a method for online subscription data configuration of a user equipment, UE, in case that the UE has already connected to a network of a first operator and then initiates switching a service from the network of the first operator to a network of a second operator.

Moreover, the 3GPP standard contribution from Samsung "S2-171133 - SMF selection in roaming scenario" discloses that, in roaming cases, for a new PDU session, the AMF selects a SMF in the local PLMN and a SMF in the HPLMN. The AMF provides the identity of the selected SMF in the HPLMN to the selected SMF in the VPLMN together with an indication of whether LBO is allowed for this PDU session.

According to an embodiment, a method for moving a communication terminal from a first communication network to a second communication network is defined in independent claim 1.

Additionally, a corresponding communication network arrangement is defined in independent claim 14.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a communication system.
Figure 2 shows a UE having multiple PDN (Packet Data Network) connections to different PGWs (PDN Gateways).
Figure 3 shows a flow diagram illustrating PDN connection establishment according to an embodiment.
Figure 4 shows a flow diagram illustrating an idle mode mobility procedure according to an embodiment.
Figure 5 shows a flow diagram illustrating a connected mode mobility procedure according to an embodiment.
Figure 6 shows a flow diagram illustrating an idle and connected mode mobility procedure according to an embodiment.
Figure 7 shows a flow diagram illustrating a method for moving a communication terminal from a first communication network to a second communication network according to an embodiment.
Figure 8 shows a communication network arrangement according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

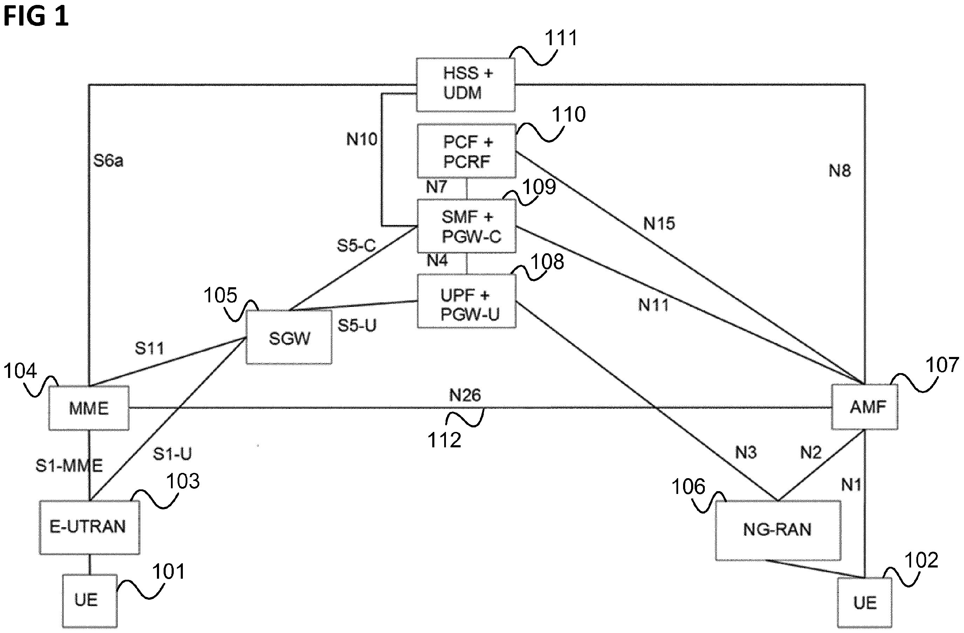

Figure 1 shows a communication system 100.

The communication system 100 comprises a 4G (Fourth Generation) UE (User Equipment) 101 and a 5G (Fifth Generation) UE 102, which may be the same mobile terminal at first operating as 4G UE 101 and, after moving or a handover, operating as 5G UE 102, i.e. the UEs 101, 102 may be the same UE, first connected to a 4G mobile communication network and then to a 5G mobile communication network.

The 4G UE 101 is connected via a 4G radio access network 103, i.e. an E-UTRAN (evolved UMTS (Universal Mobile Telecommunications System) Terrestrial Radio Access Network) to an MME (Mobility Management Entity) 104 and a SGW (Serving Gateway) 105.

The 5G UE 102 is connected to a 5G radio access network 106 and an AMF (Access and Mobility Management Function) 107.

The communication system 100 comprises components which combine 4G and 5G functionalities. These include a UPF (User Plane Function) + PGW-U (Packet Data Network Gateway User Plane) 108, an SMF (Session Management Function) + PGW-C (PGW Control Plane) 109, a PCF (Policy Control Function) + PCRF (Policy and Charging Rules Function) 110 and an HSS (Home Subscriber Server) + UDM (Unified Data Management) 111.

The SGW 105 is connected to the SMF + PGW-C 109 and the UPF + PGW-U 108. The MME 104 is connected to the HSS + UDM 111. The AMF 107 is connected to the PCF + PCRF 110, the HSS + UDM 111 and the SMF + PGW-C 109. The 5G RAN 106 is connected to the UPF + PGW-U 108.

Furthermore, the MME 104 and the AMF 107 may be connected by an N26 interface 112.

The MME 104, the SGW 105, the UPF + PGW-U 108, the SMF + PGW-C 109, the PCF + PCRF 110 and the HSS + UDM 111 are part of an Evolved Packet Core (EPC), i.e. part of the core network of the 4G mobile communication network.

The AMF 107, the UPF + PGW-U 108, the SMF + PGW-C 109, the PCF + PCRF 110 and the HSS + UDM 111 are part of a 5GC, i.e. part of the core network of the 5G mobile communication network. Thus, components which combine functionalities of 4G and 5G are part of both the 4G core network and the 5G core network.

The SMF+PGW-C 109 is a control plane entity (common for the 4G (EPC) and the 5G core network (5GC)) for Session Management, it terminates the GTP-C (GPRS Tunneling Protocol - Control Plane) towards EPC (by the S5 interface to SGW 105) and HTTP/REST (Hypertext Transfer Protocol/Representational State Transfer) towards 5GC (by the N11 interface to AMF 107).

The HSS+UDM 111 is a subscription database (common for the EPC and the 5GC). It terminates a diameter towards EPC (via the S6a interface to MME 104) and HTTP/REST towards 5GC (via the N8 interface to the AMF 107 and the N10 interface to the SMF 109). In a communication system where the N26 interface is not deployed, the mobility source network and target network may share the UE subscription profile via HSS+UDM.

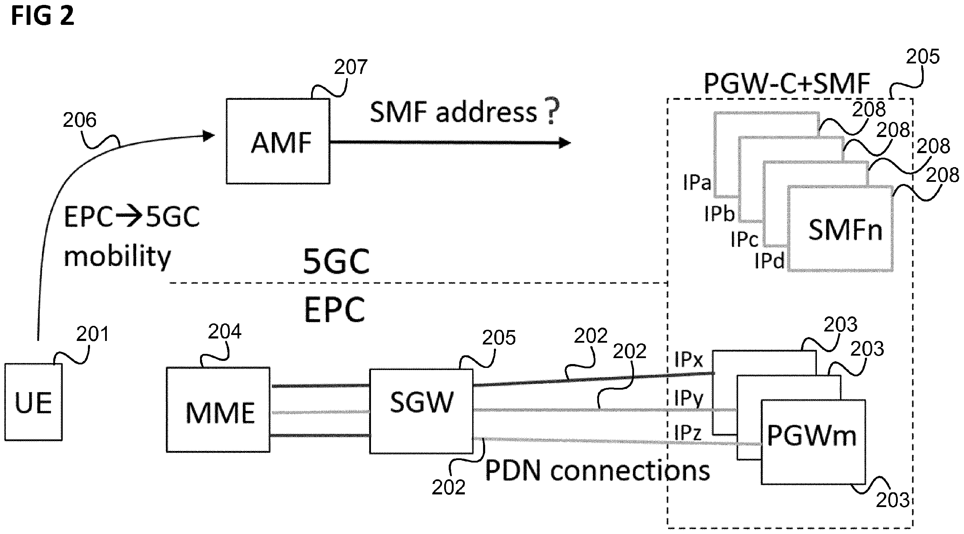

The SMF + PGW-C 109 may implement a plurality of SMFs (or SMF instances) and PGWs (or PGW instances or PGW resources). A UE 101 may have one or more PDN (Packet Data Network) connections in EPC. These PDN connections can be with the same or different PGWs. When the UE 101 moves to the 5GC, the AMF 107 needs to select the correct SMF. This is illustrated in figure 2.

Figure 2 shows a UE 201 having multiple PDN connections (PDU sessions) 202 to different PGWs (PGW-Cs) 203. As in Figure 1, the UE 201 has the PGW connections by means of an MME 204 and an SGW 205.

The PGWs 203 are all part of a PGW-C + SMF 205 (corresponding to PGW-C + SMF 109 of figure 1). When the UE 201 moves from the EPC to the 5GC, as indicated by arrow 206, an AMF 207 (corresponding to AMF 107) needs to identify one of a plurality of SMFs 208, e.g. by means of an address of the SMF 208, for example the IP address and/or the Fully-Qualified Domain Name (FQDN). This means that the AMF 207 needs, for each PDN connection 202, to select an SMF 208 corresponding to the PGW 203 providing the PDN connection 202.

The AMF 207 can easily achieve this if the PGW and the SMF have a common address (e.g. the same IP address). However, it may be desirable that the address of the SMF is different from the address of the PGW for various reasons:
- In network slicing, PDN connections related to the same PGW may be moved to different slices (i.e. SMFs) after a mobility procedure from EPC to 5GC;
- It is typically desirable that SMF and PGW-C scale independently;
- SMF and PGW-C may be implemented in separate physical servers, or in different computer units with different set of NICs (network interface controllers);
- SMF and PGW-C use different protocols (GTP-C vs. HTTP), each protocol may have a different set of NICs

Thus, it is typically desirable that the PDN connections provided by the same PGW-C can be mapped to different SMF IP addresses and vice versa. For the case of a UE moving from 4G to 5G, a PGW address should therefore be able to map to multiple SMF addresses.

According to various embodiments, for an association of SMF 208 and PGW-C 203, the PGW-C+SMF 205 (which is a network element in common between EPC and 5GC) assigns an SMF 208 instance at PDN connection establishment. The information about the assigned SMF instance 208 is stored in the HSS + UDM 111 (or another repository such as an NRF (Network Repository Function)) and provided to the AMF 207 before or during the EPC to 5GC mobility procedure.

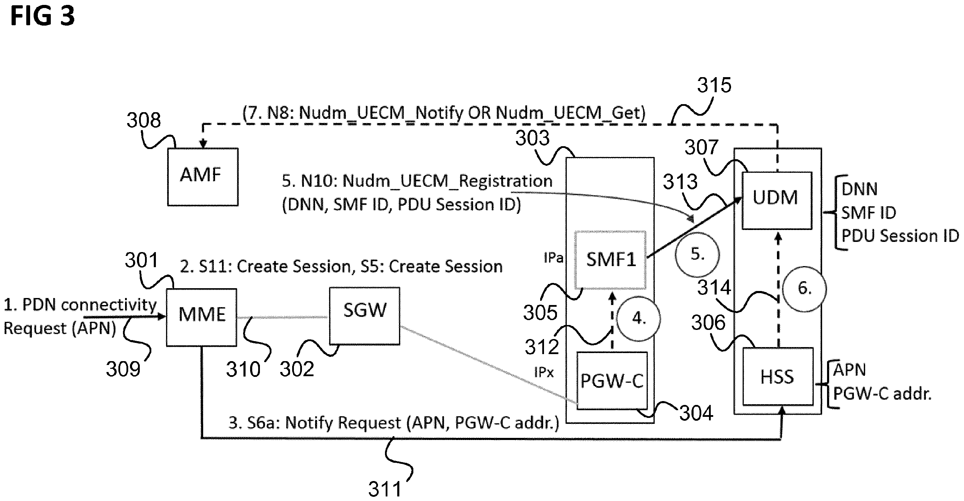

In the following, embodiments are described with reference to figures 3 to 6 wherein the description is separated into
- PDN connection establishment in EPC (UDM notification to AMF)
- Idle mode mobility procedure from EPC to 5GC
- Connected mode mobility from EPC to 5GC
for the case in which there is a N26 interface 112 and for the case that there is no N26 interface 112.

Figure 3 shows a flow diagram 300 illustrating PDN connection establishment (for both cases of the N26 interface 112 being present or not) according to an embodiment.

The message flow takes place between an MME 301, an SGW 302, an PGW-C + SMF 303 comprising a PGW-C 304 and an associated SMF 305 (e.g. among a plurality of SMFs of the PGW-C + SMF 303), an UDM + HSS comprising an HSS 306 and a UDM 307 and an AMF 308.

In 309, the MME 301 receives a PDN connectivity request (corresponding to an APN (Access Point Name)) from a UE, i.e. the UE triggers the creation of a PDN connection.

In 310, the MME 301 selects the PGW 304 and the SGW 302 creates the GTP tunnel to the PGW 304 for the PDN connection. This includes determining the IP address of the PGW 304. The PGW 304 assigns a TEID (tunnel endpoint identifier) .

In 311, the MME 301 notifies the HSS 306 about the selected PGW-C address (FQDN and/or IP address) and the APN.

In 312, the PGW-C 304 assigns the SMF 305 for this PDN connection (PDU Session), and indicates a hash to SMF 305.

In 313, the SMF 305 notifies the UDM 307 with the {SMF ID, DNN (domain network name), PDU Session ID} binding plus the hash.

The hash indicated by the SMF to the UDM is for example derived from the couple {DNN, PGW-C address}. The UDM 307 can derive the same hash from the message received from the HSS 306 in 314.

In 314, the HSS 306 notifies the UDM 307 about the {APN, PGW-C address} binding it has received in 311. The UDM 307 correlates the PGW-C 304 with the SMF 305 based on the APN/DNN and timing and/or the hash.

In 315, when the UE is registered in 5GC, the UDM 307 updates the AMF with the UE Context including the SMF ID, the PDU Session ID and the DNN.

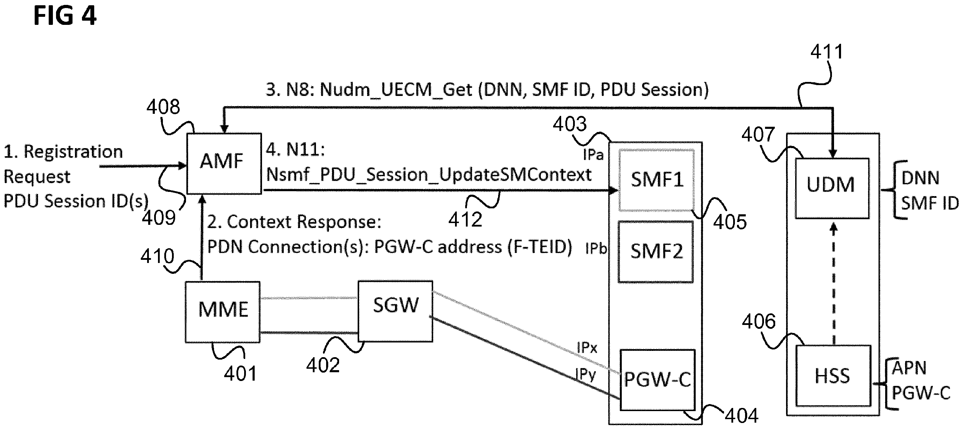

Figure 4 shows a flow diagram 400 illustrating an idle mode mobility procedure (for the case that there is a N26 interface 112) according to an embodiment.

The message flow takes place between an MME 401, an SGW 402, an PGW-C + SMF 403 comprising a PGW-C 404 and an associated SMF 405 (e.g. among a plurality of SMFs of the PGW-C + SMF 403), an UDM + HSS comprising an HSS 406 and a UDM 407 and an AMF 408.

In 409, the AMF 408 receives a registration request from the UE when the UE moves to 5GC and performs registration. The registration request includes the PDU Session ID (or multiple PDU Session IDs if the UE has more than one PDU Session).

In 410, the AMF 408 retrieves the UE EPS (Evolved Packet System) context from MME 401.

The F-TEID (Fully Qualified TEID) of the PGW-C includes the PGW-C address (FQDN or IP address) and the TEID assigned by the PGW-C 304.

In 411, the AMF 408 gets the UE context from the UDM 407 with a list of {DNN, SMF ID, PDU Session} bindings (including one binding for each PDU Session. The AMF 408 may request this list by sending an Nudm_UECM_Get message, e.g. with an identification of the UE.

In 412, the AMF 408 correlates the PDU Session ID(s) of 409 with PDU Session ID(s) of the bindings of 411 and sends a PDU session Update Context request to the corresponding SMF 305 (including the SMF Instance ID).

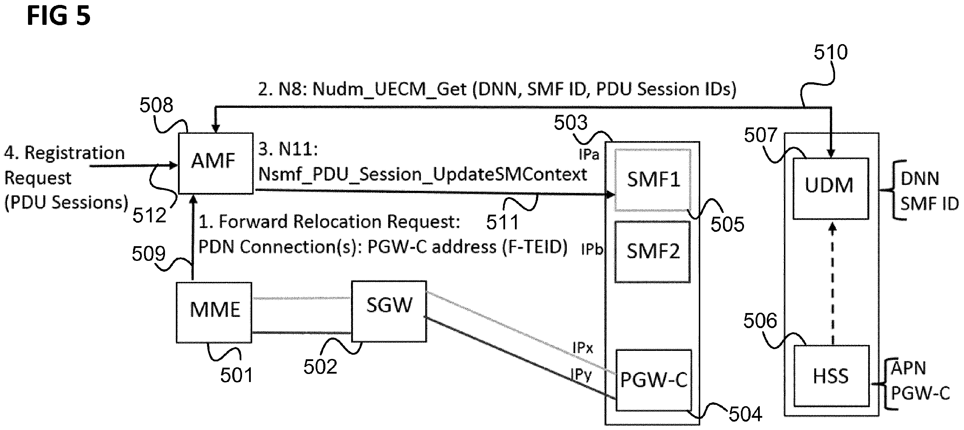

Figure 5 shows a flow diagram 500 illustrating a connected mode mobility procedure (for the case that there is a N26 interface 112) according to an embodiment.

The message flow takes place between an MME 501, an SGW 502, an PGW-C + SMF 503 comprising a PGW-C 504 and an associated SMF 505 (e.g. among a plurality of SMFs of the PGW-C + SMF 503), an UDM + HSS comprising an HSS 506 and a UDM 507 and an AMF 508.

In 509, the network triggers a handover from EPC to 5GC. The MME 501 sends a Forward Relocation request to the AMF 508. The request contains an indication of one or more PDN connections with PGW-C address (F-TEID).

In 510, the AMF 508 gets the UE CM (communication management) context from the UDM 507. It contains the {DNN, SMF ID, PDU Session ID} binding for each PDU session. The AMF 508 may do this by means of a Nudm_UECM_Get procedure.

In 511, the AMF 508 updates the SM (Session Management) context in the correct SMF 505.

After the handover has been completed, in 512, the UE performs a registration with 5GC.

It should be noted that in the flow of figure 5, the AMF 508 needs to contact the UDM 507 during the handover.

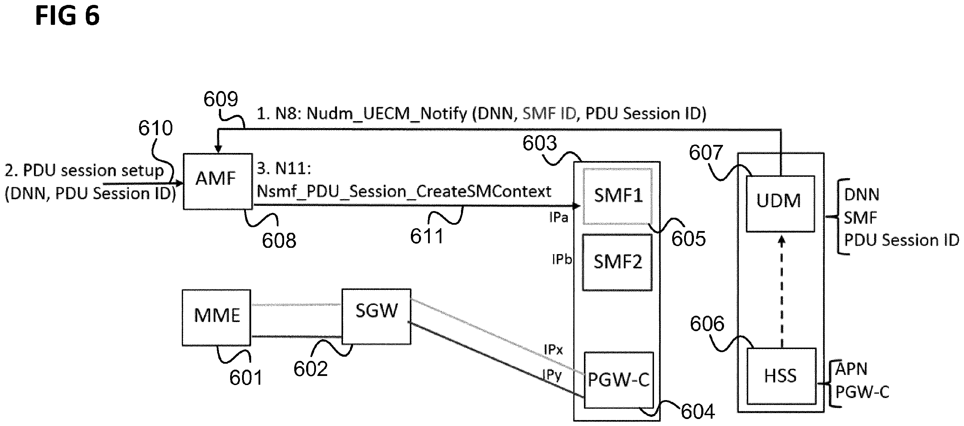

Figure 6 shows a flow diagram 600 illustrating an idle and connected mode mobility procedure (for the case that there is no N26 interface 112) according to an embodiment.

The message flow takes place between an MME 601, an SGW 602, an PGW-C + SMF 603 comprising a PGW-C 604 and an associated SMF 605 (e.g. among a plurality of SMFs of the PGW-C + SMF 603), an UDM + HSS comprising an HSS 606 and a UDM 607 and an AMF 608.

In 609, the procedure depends on whether the UE is in dual registration mode or single registration mode.

Dual registration mode: If the UE is registered in 5GC, every time a PDN connection is created in EPC, the AMF 609 is notified for the corresponding update of {DNN, SMF ID, PDU Session ID} binding (as described with reference to figure 3). The AMF 608 stores this binding.

Single registration mode: If the UE is not registered in 5GC and it performs a registration with 5GC, the AMF 608 retrieves the {DNN, SMF ID, PDU Session ID} binding (as described with reference to figure 3). The AMF 608 stores this binding.

In 610, the AMF 608 receives a PDU session setup (indicating a PDU session ID) due to the UE moving a PDN connection from EPC to 5GC.

In 611, the AMF 608 finds the correct SMF 605 based on the PDU Session ID. The AMF 608 sends a PDU session context request to the corresponding SMF 605.

For the opposite direction, i.e. from EPC to 5GC, a mobility procedure can for example be performed as follows:
- The AMF 107 obtains the EPS UE context from each SMF instance by means of the N11 interface (interface between AMF 107 and SMF 109) via SM Context Request.
- The SMF 109 returns the F-TEID to the 107 AMF and the MME 104. The SMF 109 includes a proper PGW-C address into the F-TEID.
- The SM Context Request includes an indicator that the SMF 109 knows to return the EPS UE Context with the PGW-C address(es) and TEIDs
- The MME 104 sends a Create Session Request with the PGW IP address as received in F-TEID from the SMF 109 (or AMF 107).

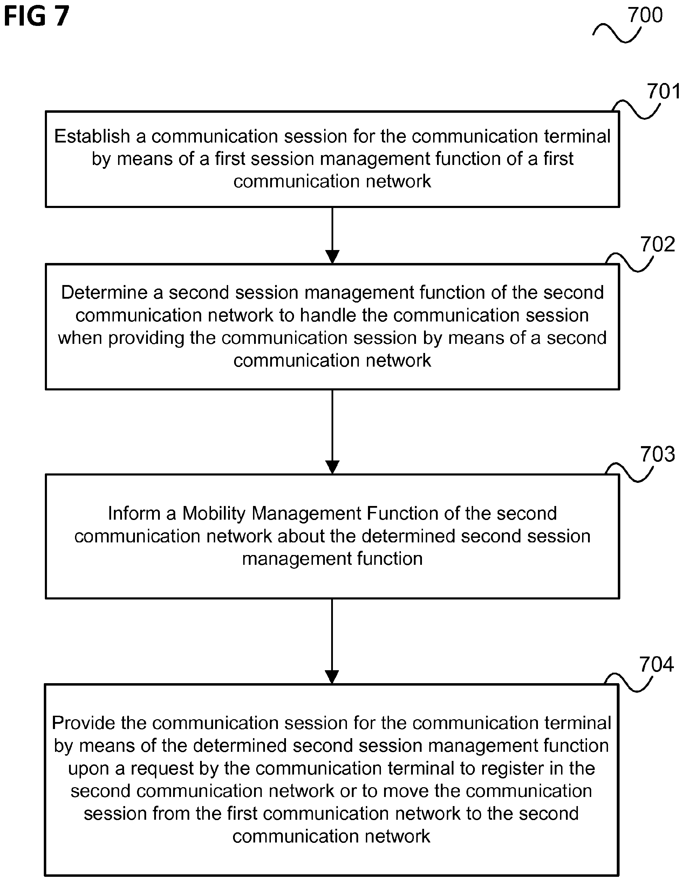

In summary, according to various embodiments, a method is provided as illustrated in figure 7.

Figure 7 shows a flow diagram 700 illustrating a method for moving a communication terminal from a first communication network to a second communication network according to an embodiment.

In 701, a communication session is established for a communication terminal by means of a first session management function (e.g. a packet data network gateway) of the first communication network.

In 702, a second session management function of the second communication network is determined which is to handle the communication session when providing the communication session by means of the second communication network is determined.

In 703, a Mobility Management Function (e.g. an Access and Mobility Management Function) of the second communication network is informed about the determined second session management function.

In 704, the communication session is provided for the communication terminal by means of the determined second session management function upon a request by the communication terminal to register in the second communication network or to move the communication session to the second communication network.

According to various embodiments, in other words, a session management function of a second communication network is assigned for a communication session which is responsible when the communication session is moved to the second communication network from a first communication network via which the communication session is established. The information about the assigned session management function is given to the second communication network such that, when there is a request to register the communication terminal (e.g. a UE) in the second communication network or to move the communication session to the second communication network, the Mobility Management Function of the second communication network immediately knows which session management function should handle the communication session for the communication terminal.

The Mobility Management Function may for example be informed about the determined session management function via an interface between the Mobility Management Function and a repository such as an UDM or an NRF.

Moving a communication terminal from a first communication network to a second communication network may be understood as switching from serving the communication terminal by the first communication network to serving the communication terminal by the second communication network. This can also be seen as a mobility procedure in idle or connected mode such as a handover or a reselection or a registration for mobility or a re-establishment of an existing communication session in the second communication network. This "moving" does not necessarily imply that the communication terminal is actually physically moved.

The mechanism according to figure 7 allows 4G and 5G interworking, such as mobility procedures in idle or connected mode like reselection and handover, without the need for a common identifier used by the PGW instance selected at PDN connection establishment and the SMF instance used after moving a PDU session to the 5G network. This allows in particular independent scaling of PGW and SMF instances.

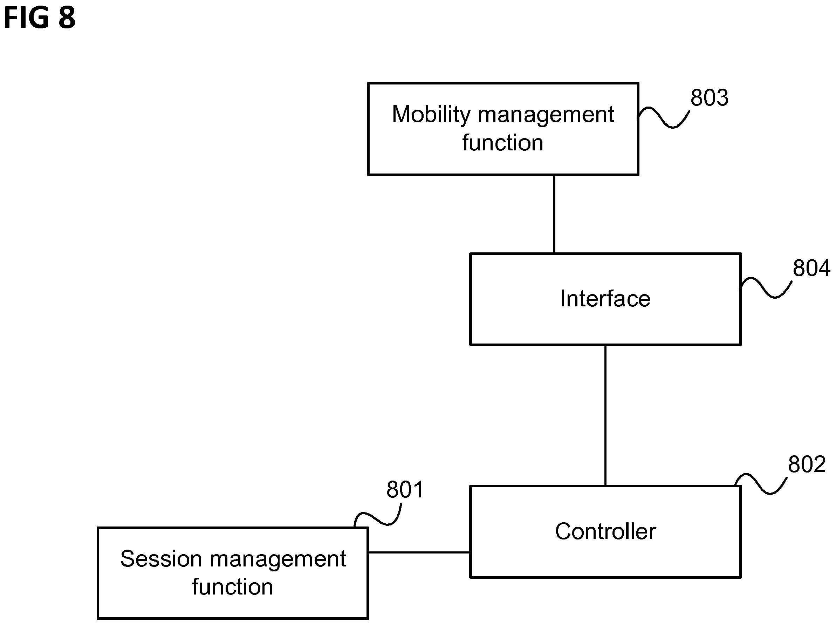

The method of figure 7 is for example carried out by a communication network arrangement as illustrated in figure 8.

Figure 8 shows a communication network arrangement 800 according to an embodiment.

The communication network arrangement 800 comprises a first session management function (e.g. a packet data network gateway) 801 of a first communication network configured to provide a communication session for the communication terminal and a controller 802 configured to determine a second session management function of a second communication network, wherein the second management function is to handle the communication session when providing the communication session by means of the second communication network.

Further, the communication network arrangement comprises a Mobility Management Function (e.g. an Access and Mobility Management Function) 803 of the second communication network and a communication interface 804 configured to inform the Mobility Management Function of the second communication network about the determined second session management function.

The Mobility Management Function 803 is configured to provide the communication session for the communication terminal by means of the determined session management function upon a request by the communication terminal to register in the second communication network or move the communication session to the second communication network.

Various examples are described below.
Example 1 is a method for moving a communication terminal from a first communication network to a second communication network as illustrated in figure 7.
Example 2 is the method of Example 1, wherein a component of the first communication network determines the second session management function.
Example 3 is the method of Example 1 or 2, wherein the first session management function determines the second session management function.
Example 4 is the method any one of Examples 1 to 3, wherein the first session management function or the second session management function is a packet data gateway in 4G Core network or a Session Management Function in a 5G Core network.
Example 5 is the method of any one of Examples 1 to 4, wherein the communication session is a packet data unit session.
Example 6 is the method of any one of Examples 1 to 5, further comprising storing the identification of the determined second session management function in a network repository function of the first communication network or a network repository function of the second communication network or both.
Example 7 is the method of Example 6, further comprising that the determined second session management function informs the network repository function of the second communication network about its association with the communication session and that the network repository function of the second communication network associates the first session management function with the determined second session management function based on timing information of the communication session or a hash of a notification message about the communication session.
Example 8 is the method of Example 6 or 7, comprising that the network repository function informs the Mobility Management Function of the second communication network about the determined second session management function
Example 9 is the method of any one of Examples 1 to 8, comprising informing the Mobility Management Function of the second communication network about the determined second session management function before the communication terminal requests to move the communication session to the second communication network.
Example 10 is the method of any one of Examples 1 to 9, further comprising the Mobility Management Function receiving the request by the communication terminal to register in the second communication network.
Example 11 is the method of any one of Examples 1 to 10, wherein the request by the communication terminal comprises a request for the provision of the communication session by the second communication network.
Example 12 is the method of any one of Examples 1 to 11, wherein the Mobility Management Function receives an identification of the communication session and correlates the identification of the communication session with the determined second session management function.
Example 13 is the method of any one of Examples 1 to 12, wherein the request by the communication terminal includes an identification of the communication session.
Example 14 is the method of any one of Examples 1 to 13, wherein the Mobility Management Function is informed about the determined second session management function by means of an information about a binding of the communication session with the second session management function.
Example 15 is a communication network arrangement as illustrated in figure 8.
Example 16 is the communication network arrangement of Example 15, wherein the controller is a component of the first communication network.
Example 17 is the communication network arrangement of Example 15 or 16, wherein the first session management function implements the controller.
Example 18 is the communication network arrangement any one of Examples 15 to 17, wherein the first session management function or the second session management function is a packet data gateway in 4G Core network or a Session Management Function in a 5G Core network.
Example 19 is the communication network arrangement of any one of Examples 15 to 18, wherein the communication session is a packet data unit session.
Example 20 is the communication network arrangement of any one of Examples 15 to 19, further comprising a network repository function configured to store the identification of the determined second session management function, wherein the network repository function is a network repository function of the first communication network or a network repository function of the second communication network or both.
Example 21 is the communication network arrangement of Example 20, further comprising that the determined second session management function is configured to inform the network repository function about its association with the communication session and that the network repository function associates the first session management function with the determined second session management function based on timing information of the communication session or a hash of a notification message about the communication session.
Example 22 is the communication network arrangement of Example 20 or 21, wherein the network repository function is configured to inform the Mobility Management Function of the second communication network about the determined second session management function
Example 23 is the communication network arrangement of any one of Examples 15 to 22, wherein the communication interface is configured to inform the Mobility Management Function of the second communication network about the determined second session management function before the communication terminal requests to move the communication session to the second communication network.
Example 24 is the communication network arrangement of any one of Examples 15 to 23, wherein the Mobility Management Function is configured to receive the request by the communication terminal to register in the second communication network.
Example 25 is the communication network arrangement of any one of Examples 15 to 24, wherein the request by the communication terminal comprises a request for the provision of the communication session by the second communication network.
Example 26 is the communication network arrangement of any one of Examples 15 to 25, wherein the Mobility Management Function is configured to receive an identification of the communication session and to correlate the identification of the communication session with the determined second session management function.
Example 27 is the communication network arrangement of any one of Examples 15 to 26, wherein the request by the communication terminal includes an identification of the communication session.
Example 28 is the communication network arrangement of any one of Examples 15 to 27, wherein the communication interface is configured to inform the Mobility Management Function about the determined second session management function by means of an information about a binding of the communication session with the second session management function.

According to a further example, a method for assigning a session management function in a 5G core network during a communication session establishment procedure in a 4G core network in a communication system that supports mobility between the 4G core network and the 5G core network is provided. The method comprises a session management function in the 4G core network selecting the session management function in the 5G core network that is to handle the communication session after a mobility procedure from the 4G core network to the 5G core network and the session management function in the 5G core network providing a user data management repository function in the mobile communication network with a session identifier and an identifier of the session management function in the 5G core network.

The user data management repository function may provide the identifier of the session management function in the 5G core network to a mobility management function in the 5G core network before or during a mobility procedure.

It should be noted that one or more of the features of any of the examples above may be combined with any one of the other examples.

The components of the communication network arrangement (e.g. the mobility management function, the interface, the controller and the PGW) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the scope of the appended claims.

## Claims

1. A method for moving a communication terminal (201) from a first communication network to a second communication network comprising:
Establishing a communication session for the communication terminal by means of a first session management function of the first communication network;
Determining a second session management function of the second communication network, wherein the second session management function is to handle the communication session when providing the communication session by means of the second communication network;
Informing a Mobility Management Function (204) of the second communication network about the determined second session management function; and
Providing the communication session for the communication terminal by means of the determined second session management function upon a request by the communication terminal to register in the second communication network or to move the communication session from the first communication network to the second communication network, **characterized in that** a component of the first communication network determines the second session management function.

2. The method of claim 1, wherein the first session management function determines the second session management function.

3. The method any one of claims 1 to 2, wherein the first session management function or the second session management function is a packet data gateway in 4G Core network or a Session Management Function in a 5G Core network.

4. The method of any one of claims 1 to 3, wherein the communication session is a packet data unit session.

5. The method of any one of claims 1 to 4, further comprising storing the identification of the determined second session management function in a network repository function of the first communication network or a network repository function of the second communication network or both.

6. The method of claim 5, further comprising that the determined second session management function informs the network repository function of the second communication network about its association with the communication session and that the network repository function of the second communication network associates the first session management function with the determined second session management function based on timing information of the communication session or a hash of a notification message about the communication session.

7. The method of claim 5 or 6, comprising that the network repository function informs the Mobility Management Function of the second communication network about the determined second session management function.

8. The method of any one of claims 1 to 7, comprising informing the Mobility Management Function of the second communication network about the determined second session management function before the communication terminal requests to move the communication session to the second communication network.

9. The method of any one of claims 1 to 8, further comprising the Mobility Management Function receiving the request by the communication terminal to register in the second communication network.

10. The method of any one of claims 1 to 9, wherein the request by the communication terminal comprises a request for the provision of the communication session by the second communication network.

11. The method of any one of claims 1 to 10, wherein the Mobility Management Function receives an identification of the communication session and correlates the identification of the communication session with the determined second session management function.

12. The method of any one of claims 1 to 11, wherein the request by the communication terminal includes an identification of the communication session.

13. The method of any one of claims 1 to 12, wherein the Mobility Management Function is informed about the determined second session management function by means of an information about a binding of the communication session with the second session management function.

14. A communication network arrangement for moving a communication terminal (201) from a first communication network to a second communication network comprising:
a first session management function of a first communication network configured to establish a communication session for the communication terminal (201) ;
a controller configured to determine a second session management function of the second communication network, wherein the second session management function is to handle the communication session when providing the communication session by means of the second communication network;
a Mobility Management Function of the second communication network (204); and
a communication interface configured to inform a Mobility Management Function of the second communication network about the determined second session management function;
wherein the Mobility Management Function is configured to provide the communication session for the communication terminal by means of the determined second session management function upon a request by the communication terminal to register in the second communication network or to move the communication session from the first communication network to the second communication network;
**characterized in that** a component of the first communication network is adapted to determine the second session management function.

## Patentansprüche

1. Ein Verfahren zum Umziehen eines Kommunikationsterminals (201) von einem ersten Kommunikationsnetzwerk zu einem zweiten Kommunikationsnetzwerk, aufweisend:
Einrichten einer Kommunikationssitzung für das Kommunikationsterminal durch eine erste Sitzungsverwaltungsfunktion des ersten Kommunikationsnetzwerks;
Ermitteln einer zweiten Sitzungsverwaltungsfunktion des zweiten Kommunikationsnetzwerks, wobei die zweite Sitzungsverwaltungsfunktion dazu dient, die Kommunikationssitzung beim Bereitstellen der Kommunikationssitzung durch das zweite Kommunikationsnetzwerk zu handhaben;
Informieren einer Umzugsverwaltungsfunktion (204) des zweiten Kommunikationsnetzwerks über die ermittelte zweite Sitzungsverwaltungsfunktion; und
Bereitstellen der Kommunikationssitzung für das Kommunikationsterminal durch die ermittelte zweite Sitzungsverwaltungsfunktion auf eine Anfrage durch das Kommunikationsterminal hin, das zweite Kommunikationsnetzwerk zu registrieren oder die Kommunikationssitzung von dem ersten Kommunikationsnetzwerk zu dem zweiten Kommunikationsnetzwerk umzuziehen,
charakterisiert dadurch, dass eine Komponente des ersten Kommunikationsnetzwerks die zweite Sitzungsverwaltungsfunktion ermittelt.

2. Das Verfahren gemäß Anspruch 1, wobei die erste Sitzungsverwaltungsfunktion die zweite Sitzungsverwaltungsfunktion ermittelt.

3. Das Verfahren gemäß Anspruch 1 oder 2, wobei die erste Sitzungsverwaltungsfunktion oder die zweite Sitzungsverwaltungsfunktion ein Paketdaten-Gateway in einem 4G-Kernnetzwerk oder eine Sitzungsverwaltungsfunktion in einem 5G-Kernnetzwerk ist.

4. Das Verfahren gemäß einem der Ansprüche 1 bis 3, wobei die Kommunikationssitzung eine Paketdateneinheitssitzung ist.

5. Das Verfahren gemäß einem der Ansprüche 1 bis 4, ferner aufweisend das Speichern der Identifikation der ermittelten zweiten Sitzungsverwaltungsfunktion in einer Netzwerk-Repositoriumsfunktion des ersten Kommunikationsnetzwerks oder einer Netzwerk-Repositoriumsfunktion des zweiten Kommunikationsnetzwerks oder beides.

6. Das Verfahren gemäß Anspruch 5, ferner aufweisend, dass die ermittelte zweite Sitzungsverwaltungsfunktion die Netzwerk-Repositoriumsfunktion des zweiten Kommunikationsnetzwerks über ihre Assoziation mit der Kommunikationssitzung informiert und dass die Netwerk-Repositoriumsfunktion des zweiten Kommunikationsnetzwerks die erste Sitzungsverwaltungsfunktion mit der ermittelten zweiten Sitzungsverwaltungsfunktion assoziiert, basierend auf Zeitinformationen der Kommunikationssitzung oder eines Hashs einer Mitteilungsnachricht über die Kommunikationssitzung.

7. Das Verfahren gemäß Anspruch 5 oder 6, aufweisend, dass die Netzwerk-Repositoriumsfunktion die Umzugsverwaltungsfunktion des zweiten Kommunikationsnetzwerks über die ermittelte zweite Sitzungsverwaltungsfunktion informiert.

8. Das Verfahren gemäß einem der Ansprüche 1 bis 7, aufweisend Informieren der Umzugsverwaltungsfunktion des zweiten Kommunikationsnetzwerks über die ermittelte zweite Sitzungsverwaltungsfunktion bevor das Kommunikationsterminal anfragt, die Kommunikationssitzung zu dem zweiten Kommunikationsnetzwerk umzuziehen.

9. Das Verfahren gemäß einem der Ansprüche 1 bis 8, ferner aufweisend, dass die Umzugsverwaltungsfunktion die Anfrage durch das Kommunikationsterminal zum Registrieren in dem zweiten Kommunikationsnetzwerk empfängt.

10. Das Verfahren gemäß einem der Ansprüche 1 bis 9, wobei die Anfrage durch das Kommunikationsterminal eine Anfrage für die Bereitstellung der Kommunikationssitzung durch das zweite Kommunikationsnetzwerk aufweist.

11. Das Verfahren gemäß einem der Ansprüche 1 bis 10, wobei die Umzugsverwaltungsfunktion eine Identifikation der Kommunikationssitzung empfängt und die Identifikation der Kommunikationssitzung mit der ermittelten zweiten Sitzungsverwaltungsfunktion korreliert.

12. Das Verfahren gemäß einem der Ansprüche 1 bis 11, wobei die Anfrage durch das Kommunikationsterminal eine Identifikation der Kommunikationssitzung aufweist.

13. Das Verfahren gemäß einem der Ansprüche 1 bis 12, wobei die Umzugsverwaltungsfunktion durch eine Information über eine Bindung der Kommunikationssitzung mit der zweiten Sitzungsverwaltungsfunktion über die ermittelte zweite Sitzungsverwaltungsfunktion informiert wird.

14. Eine Kommunikationsnetzwerkvorrichtung zum Umziehen eines Kommunikationsterminals (201) von einem ersten Kommunikationsnetzwerk zu einem zweiten Kommunikationsnetzwerk, aufweisend:
eine erste Sitzungsverwaltungsfunktion eines ersten Kommunikationsnetzwerks, ausgelegt zum Einrichten einer Kommunikationssitzung für das Kommunikationsterminal (201);
eine Steuervorrichtung, ausgelegt zum Ermitteln einer zweiten Sitzungsverwaltungsfunktion des zweiten Kommunikationsnetzwerks, wobei die zweite Sitzungsverwaltungsfunktion dazu dient, die Kommunikationssitzung beim Bereitstellen der Kommunikationssitzung durch das zweite Kommunikationsnetzwerk zu handhaben;
eine Umzugsverwaltungsfunktion des zweiten Kommunikationsnetzwerks (204); und
eine Kommunikationsschnittstelle, ausgelegt zum Informieren einer Umzugsverwaltungsfunktion des zweiten Kommunikationsnetzwerks über die ermittelte zweite Sitzungsverwaltungsfunktion;
wobei die Umzugsverwaltungsfunktion ausgelegt ist zum Bereitstellen der Kommunikationssitzung für das Kommunikationsterminal durch die ermittelte zweite Sitzungsverwaltungsfunktion auf eine Anfrage durch das Kommunikationsterminal hin, das zweite Kommunikationsnetzwerk zu registrieren oder die Kommunikationssitzung von dem ersten Kommunikationsnetzwerk zu dem zweiten Kommunikationsnetzwerk umzuziehen;
charakterisiert dadurch, dass eine Komponente des ersten Kommunikationsnetzwerks zum Ermitteln der zweiten Sitzungsverwaltungsfunktion geeignet ist.

## Revendications

1. Procédé de déplacement d'un terminal de communication (201), d'un premier réseau de communication à un second réseau de communication, comprenant les étapes ci-dessous consistant à :
établir une session de communication pour le terminal de communication, au moyen d'une première fonction de gestion de session du premier réseau de communication ;
déterminer une seconde fonction de gestion de session du second réseau de communication, dans lequel la seconde fonction de gestion de session consiste à gérer la session de communication lors de la fourniture de la session de communication au moyen du second réseau de communication ;
informer une fonction de gestion de la mobilité (204) du second réseau de communication en ce qui concerne la seconde fonction de gestion de session déterminée ; et
fournir la session de communication pour le terminal de communication, au moyen de la seconde fonction de gestion de session déterminée, suite à une demande du terminal de communication visant à s'enregistrer dans le second réseau de communication ou à déplacer la session de communication du premier réseau de communication au second réseau de communication ;
**caractérisé en ce qu'**un composant du premier réseau de communication détermine la seconde fonction de gestion de session.

2. Procédé selon la revendication 1, dans lequel la première fonction de gestion de session détermine la seconde fonction de gestion de session.

3. Procédé selon l'une quelconque des revendications 1 à 2, dans lequel la première fonction de gestion de session ou la seconde fonction de gestion de session est une passerelle de données par paquets dans un réseau de base 4G, ou une fonction de gestion de session dans un réseau de base 5G.

4. Procédé selon l'une quelconque des revendications 1 à 3, dans lequel la session de communication est une session d'unité de données par paquets.

5. Procédé selon l'une quelconque des revendications 1 à 4, comprenant en outre l'étape consistant à stocker l'identification de la seconde fonction de gestion de session déterminée, dans une fonction de référentiel de réseau du premier réseau de communication ou dans une fonction de référentiel de réseau du second réseau de communication, ou les deux.

6. Procédé selon la revendication 5, comprenant en outre l'étape dans laquelle la seconde fonction de gestion de session déterminée informe la fonction de référentiel de réseau du second réseau de communication en ce qui concerne son association avec la session de communication, et l'étape dans laquelle la fonction de référentiel de réseau du second réseau de communication associe la première fonction de gestion de session à la seconde fonction de gestion de session déterminée, sur la base d'informations de temporisation de la session de communication ou d'un hachage d'un message de notification concernant la session de communication.

7. Procédé selon la revendication 5 ou 6, comprenant l'étape dans laquelle la fonction de référentiel de réseau informe la fonction de gestion de la mobilité du second réseau de communication en ce qui concerne la seconde fonction de gestion de session déterminée.

8. Procédé selon l'une quelconque des revendications 1 à 7, comprenant l'étape consistant à informer la fonction de gestion de la mobilité du second réseau de communication, en ce qui concerne la seconde fonction de gestion de session déterminée, avant que le terminal de communication ne demande le déplacement de la session de communication vers le second réseau de communication.

9. Procédé selon l'une quelconque des revendications 1 à 8, comprenant en outre l'étape dans laquelle la fonction de gestion de la mobilité reçoit la demande du terminal de communication visant à s'enregistrer dans le second réseau de communication.

10. Procédé selon l'une quelconque des revendications 1 à 9, dans lequel la demande du terminal de communication comprend une demande pour la fourniture de la session de communication par le second réseau de communication.

11. Procédé selon l'une quelconque des revendications 1 à 10, dans lequel la fonction de gestion de la mobilité reçoit une identification de la session de communication et corrèle l'identification de la session de communication avec la seconde fonction de gestion de session déterminée.

12. Procédé selon l'une quelconque des revendications 1 à 11, dans lequel la demande du terminal de communication inclut une identification de la session de communication.

13. Procédé selon l'une quelconque des revendications 1 à 12, dans lequel la fonction de gestion de la mobilité est informée en ce qui concerne la seconde fonction de gestion de session déterminée au moyen d'une information concernant une liaison de la session de communication avec la seconde fonction de gestion de session.

14. Agencement de réseau de communication pour déplacer un terminal de communication (201) d'un premier réseau de communication à un second réseau de communication, comprenant :
une première fonction de gestion de session d'un premier réseau de communication configurée de manière à établir une session de communication pour le terminal de communication (201) ;
un contrôleur configuré de manière à déterminer une seconde fonction de gestion de session du second réseau de communication, dans lequel la seconde fonction de gestion de session consiste à gérer la session de communication dans le cadre de la fourniture de la session de communication au moyen du second réseau de communication ;
une fonction de gestion de la mobilité du second réseau de communication (204) ; et
une interface de communication configurée de manière à informer une fonction de gestion de la mobilité du second réseau de communication en ce qui concerne la seconde fonction de gestion de session déterminée ;
dans lequel la fonction de gestion de la mobilité est configurée de manière à fournir la session de communication pour le terminal de communication au moyen de la seconde fonction de gestion de session déterminée, suite à une demande du terminal de communication visant à s'enregistrer dans le second réseau de communication ou à déplacer la session de communication du premier réseau de communication au second réseau de communication ;
**caractérisé en ce qu'**un composant du premier réseau de communication est apte à déterminer la seconde fonction de gestion de session.
